# EUROPEAN PATENT APPLICATION

(11) **EP 1 825 777 A1**
(43) Date of publication of application: **29.08.2007**
(21) Application number: 07425023.4
(22) Date of filing: 18.01.2007
(51) Int. Cl.: A47B 21/00, G06F 1/16

(54) **Metallic case for modular PC**

(30) Priority: 21.02.2006 IT VE20060008 U
(71) Applicant: Barina, Enrico, 30125 Venezia (VE) (IT); Croatto, Renzo, 30171 Mestre (VE) (IT); Scarpa, Roberto, 30123 Venezia (VE) (IT)
(72) Inventor: Barina, Enrico, 30125 Venezia (VE) (IT); Croatto, Renzo, 30171 Mestre (VE) (IT); Scarpa, Roberto, 30123 Venezia (VE) (IT)

(57) **Abstract**

Metallic case by two unit composed made for lodge hardware components with aim complete assembly of Pc.

The first section is the mainboard location while, the second one contain other removable unit and the starter command.

Both of the case can be assembled on office furniture like desk, table exc.... Is possible put combined or separated.

## Description

It's a 0,6 mm. Sheet zinc case made by two boxes that can be used combined in single unit or separated.

The first element lodge one PC's motharboard , one PC's feeder and one box for a maximum of three HD, the second box lodge a pair of CDROM side by side, two floppy laid one on the top of the othar and on the side of CDROM, and one lodge board for signalling and luminous switch. The shape of both elements is the same, height and lenght can change in base of the elements locate. On the side of the first elements are located the connection for optional device in based on standard Measure

The second element's frontal side presents the access for CDROM's and floppy's drawers in horizontal position.

The build of the cases it's simple and free by frame to reinforce the boxes just because the boxes ain't self- carrying but only use like container.

The element that lodge the motharboard can be fixed in a vertical position down a table, desck ecx.. and connect to access with a tube for electric cables .

For more simple maintenance the elements are fixed at the furnish with screwes.

The drawers sliding permit a quickly removal

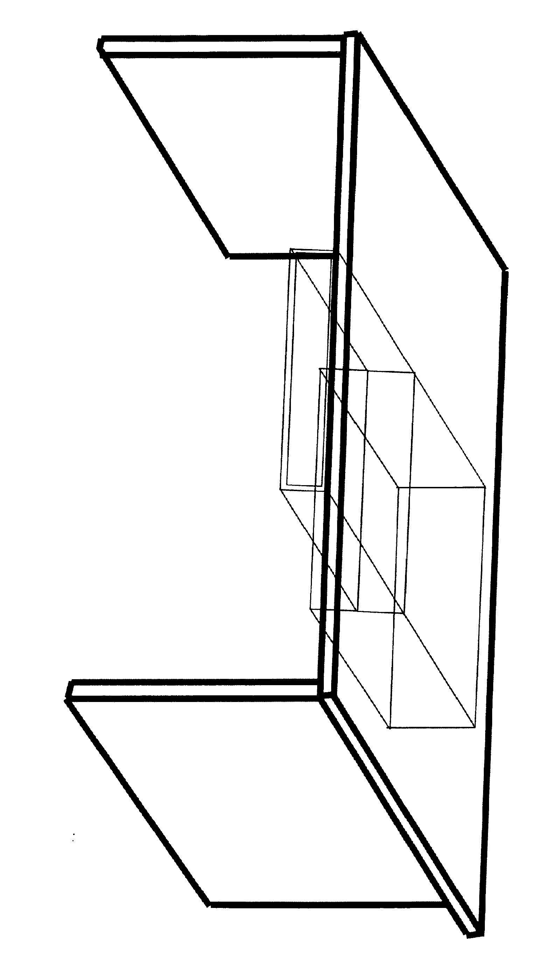

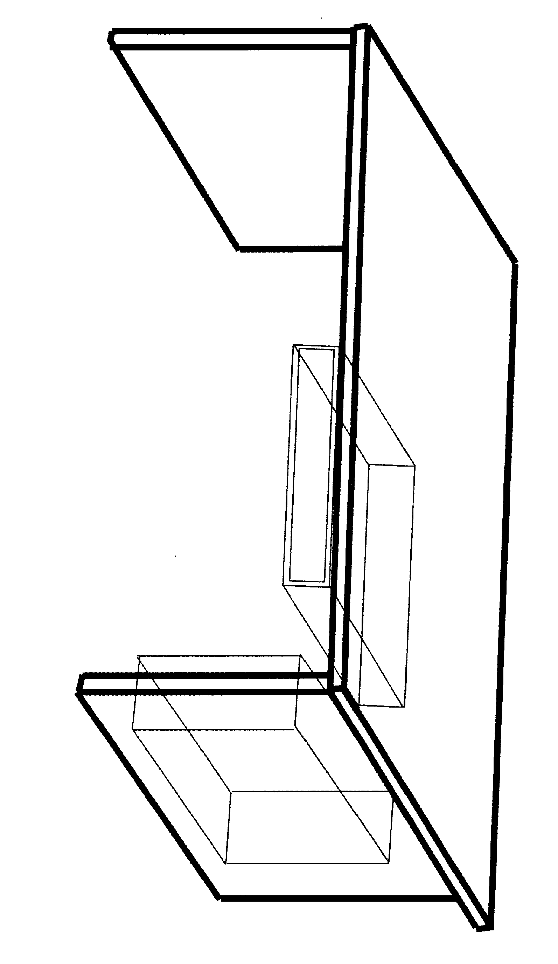

## Claims

1. The innovative claim consist in the possibility of place a Personal Computer in suspended position to exploited an unused space.

2. Cosent an optimal cleaning of the set and working position also, the set leave far from the floor and it's possible toseparate in base of different avaiability of space.

3. One part consent the access to components and the one that lodge the operative sistem stay in a too protect area.
